Europäisches Patentamt

European Patent Office

Office européen des brevets

(11) Veröffentlichungsnummer: **0 340 317 B1**

(12) **EUROPÄISCHE PATENTSCHRIFT**

(45) Veröffentlichungstag der Patentschrift: **27.05.92**

(51) Int. Cl.⁵: **G01D 5/22**

(21) Anmeldenummer: **88106985.0**

(22) Anmeldetag: **30.04.88**

(54) Induktiver Wegaufnehmer.

(43) Veröffentlichungstag der Anmeldung:
**08.11.89 Patentblatt 89/45**

(45) Bekanntmachung des Hinweises auf die
Patenterteilung:
**27.05.92 Patentblatt 92/22**

(84) Benannte Vertragsstaaten:
**DE FR GB**

(56) Entgegenhaltungen:
**DE-A- 3 528 811**
**FR-A- 2 509 371**
**GB-A- 900 549**
**GB-A- 2 089 511**
**US-A- 4 623 840**

(73) Patentinhaber: **HOTTINGER BALDWIN MESS-TECHNIK GMBH**
**Im Tiefen See 45 Postfach 42 35**
**W-6100 Darmstadt(DE)**

(72) Erfinder: **Nicklas, Horst**
**Darmstädter Strasse 41**
**W-6101 Modautal 1(DE)**

(74) Vertreter: **Brandt, Ernst-Ulrich**
**Hottinger Baldwin Messtechnik GmbH Patentabteilung Im Tiefen See 45 Postfach 42 35**
**W-6100 Darmstadt(DE)**

## Beschreibung

Die Erfindung bezieht sich auf einen induktiven Wegaufnehmer mit zwei koaxial und in einer Meßbrücke angeordneten Induktionsspulen gleicher Induktionsrichtung, mit in Abhängigkeit von dem zu messenden Weg axial beweglich gelagertem Spulenkern aus magnetisierbarem Material und mit einer dritten Spule, die so angeordnet und bemessen ist, daß ihr Magnetfeld in einem Bereich des Aufnehmers eine solche Überlagerung des Magnetfeldes einer benachbarten Induktionsspule bewirkt, daß dadurch der Abfall der Induktion an einem Ende der Induktionsspule aufgehoben wird, wobei die Länge des Spulenkerns und dessen Bewegungsbereich so bemessen sind, daß der Spulenkern in jeder seiner Stellungen durch die dritte Spule hindurchragt und sich sein Ende stets innerhalb der ersten Induktionsspule befindet und wobei die dritte Spule in zumindest einen der beiden Zweige der Meßbrücke eingefügt ist.

Ein derartige Wegaufnehmer ist aus der DE-C-35 28 811 bekannt. Bei dem bekannten Wegaufnehmer ragt der Spulenkern entsprechend dem zu messenden Weg in unterschiedlichem Maß in das Innere von Induktionsspulen und verschiebt demzufolge das Potential in den Induktionsspulen. In der Diagonalen einer elektrischen Meßbrücke ist eine Differenzspannung, die als Maß für den zu messenden Weg dient, meßbar. Da bei Induktionsspulen die Induktion nicht über die gesamte Spulenlänge linear verläuft, ist bei dem bekannten Wegaufnehmer zwischen zwei Induktionsspulen eine Kompensationsspule vorgesehen; der Spulenkern ragt in jeder seiner Stellungen durch die Kompensationsspule hindurch in ein Teil jeder der Induktionsspulen. Mit dieser Ausgestaltung wird eine Linearisierung des Meßsignals des Wegaufnehmers erreicht. Zwar ist der Raumbedarf für die Kompensationsspule zwischen den beiden Induktionsspulen vernachlässigbar, jedoch ist die Baulänge insgesamt, die im wesentlichen durch die Anordnung der beiden Induktionsspulen bestimmt wird, verhältnismäßig groß.

Der Erfindung liegt die Aufgabe zugrunde, einen induktiven Wegaufnehmer zu schaffen, bei dem mit einfachen und wirksamen Mitteln eine Linearisierung des Meßsignals bei kompakter Bauweise erzielt wird.

Erfindungsgemäß wird diese Aufgabe bei einem Wegaufnehmer nach dem Oberbegriff des Patentanspruchs 1 durch die im kennzeichnenden Anspruchsteil angegebenen Merkmale erreicht.

Mit der Erfindung wird nicht nur die Baulänge des Wegaufnehmers verringert, sondern darüberhinaus das Verhältnis von Baulänge zu Meßweg entscheidend verbessert. Je nach Stellung des Spulenkerns ändert sich in der dritten Spule der magnetische Fluß und die Flußdichtewerte, wodurch die Linearität des Ausgangssignals beeinflußt wird. Ist der Spulenkern nahe seiner einen Endstellung nur wenig in die erste Induktionsspule eingeschoben, so liegt ein größerer magnetischer Fluß bzw. eine größere Flußdichte durch die dritte Spule und dieser benachbarter Bauteile vor als in dem Fall, in dem der Spulenkern sich nahe der anderen Endstellung fast vollständig eingeschoben in der ersten Induktionsspule befindet; in letzterem Fall liegt ein kleinerer Fluß bzw. eine kleinere Flußdichte in der dritten Spule und den benachbarten Bauteilen vor, da nun auch die zweite Spule wirksam in den Magnetkreis eingekoppelt ist und den Magnetkreis beträchtlich beeinflußt. Die Änderung des Flusses und damit die Änderung des magnetischen Widerstandes beeinflußt die Linearisierung des Ausgangssignals des Wegaufnehmers. Zusätzlich bündeln das Magnetfeld der dritten Spule und das der zweiten Spule das Magnetfeld der ersten Spule, wodurch vernachlässigbarer Streufluß an den Endbereichen der ersten Spule auftritt und die induktiven Eigenschaften der gesamten Anordnung linearisiert werden. Bei dem erfindungsgemäßen Wegaufnehmer wird damit das Verhältnis von Baulänge zu Meßweg auf Werte nahe 1 verbessert. Ein zusätzlicher Raumbedarf in radialer Richtung besteht nicht.

Einen fertigungsgünstig ausgebildeten Wegaufnehmer erhält man bei einer Ausgestaltung der Erfindung, bei der eine der der ersten Induktionsspule benachbarten Spulen, insbesondere die als Kompensationsspule wirkende dritte Spule als Doppelspule ausgebildet ist. Die beiden Teilspulen der dritten Spule sind jeweils in Reihe mit einer der weiteren Induktionsspulen in jeweils einen Zweig einer elektrischen Wechselstrom-Halbbrücke geschaltet. Vorteilhaft ist dabei, daß durch Einfügen einer Teilspule in den jeweiligen Meßbrückenzweig das Brücken-Gleichgewicht gewährleistet ist, ohne daß ein zusätzlicher Ausgleichswiderstand erforderlich ist. Zweckmäßig ist bei einer Ausführung als Doppelspule eine Paralleldrahtwicklung für diese Spule.

Eine Verwendung des Wegaufnehmers auch in aggressiven Medien ist sichergestellt mit einer Ausgestaltung, bei der die Spulen und Ringelemente im abgedichteten Hohlraum zwischen einem Spulenträgerrohr, einem Mantelrohr sowie den Ringscheiben angeordnet sind.

Ein Ausführungsbeispiel der Erfindung ist in der Zeichnung schematisch dargestellt. Es zeigen:

Fig. 1:    den Wegaufnehmer im Längsschnitt,
Fig. 2:    das Schaltbild des Wegaufnehmers.

Der induktive Wegaufnehmer weist eine Induktionsspule 1 auf, in deren Inneren ein Spulenkern 2 aus magnetisierbarem Material längs der Spulenachse verschieblich gelagert ist. Der Spulenkern 2 ist über ein Verbindungsgestänge 3 mit einem Bauteil verbunden, dessen Verschiebungsweg gemessen werden soll.

Die Induktionsspule 1 ist auf ein Spulenträgerrohr 4 aus nicht magnetisierbarem Werkstoff gewickelt. An den axialen Enden der Induktionsspule 1 ist jeweils ein Ringelement 5 bzw. 6 aus Kunststoff angeordnet. Die Induktionsspule 1 ist in einem Mantelrohr 7 aus magnetisierbarem Werkstoff, im Ausführungsbeispiel ein Stahlrohr, aufgenommen.

Innerhalb des Mantelrohrs 7 ist an der Eintauchseite des Spulenkerns 2 benachbart zum Ringelement 5 und koaxial zur Induktionsspule 1 eine Kompensationsspule 8 aus zwei Teilspulen 9 und 10 angeordnet. Die Spule 8 ist als Doppelspule mit einer Paralleldrahtwicklung ausgebildet und wird von einem Fortsatz des Spulenträgerrohres 4 durchsetzt. Die Isolierungen der parallelen Drähte sind beispielsweise durch thermische Behandlung miteinander verbunden, so daß die beiden parallelen Drähte ein einheitliches Gebilde ergeben (Backlack-Doppelspule). Am Ende des Spulenträgerrohres 4 und des Mantelrohres 7 ist eine Ringscheibe 11 aus magnetisierbarem Werkstoff angeordnet, die den Hohlraum zwischen dem Spulenträgerrohr 4 und dem Mantelrohr 7 an dieser Stirnseite begrenzt.

Innerhalb des Rohres 7 ist am anderen Ende benachbart zum Ringelement 6 und koaxial zur Induktionsspule 1 eine weitere, als Kompensationsspule wirkende Induktionsspule 12 angeordnet. Die Induktionsspule 12 ist als Backlack-Spule ausgebildet und wird von einem Fortsatz des Spulenträgerrohres 4 durchsetzt. Am Ende des Spulenträgerrohres 4 und des Mantelrohres 7 ist eine Ringscheibe 13 aus magnetisierbarem Material angeordnet, die den Hohlraum zwischen Spulenträgerrohr 4 und Mantelrohr 7 an der zweiten Stirnseite abschließt.

Die axiale Erstreckung der Induktionsspule 1 ist vielfach größer als die der Spule 8 bzw. der Teilspulen 9 und 10 und der Spule 12, welche in etwa gleiche axiale Erstreckung aufweisen. Der Spulenkern 2 ragt in jeder seiner Stellungen durch die dritte Spule 8 hindurch in die erste Spule 1 hinein. Der Verschiebeweg des Endes des Spulenkerns 2 liegt vollständig innerhalb der Induktionsspule 1.

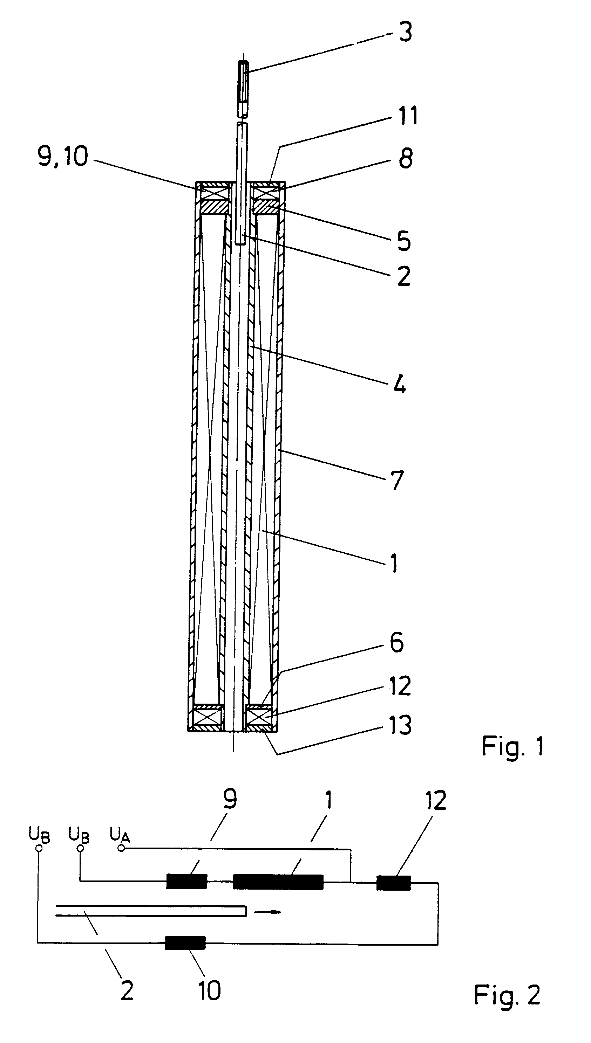

Alle Spulen 1, 9, 10 und 12 weisen im dargestellten Ausführungsbeispiel gleiche Induktionsrichtungen auf. Es kann jedoch auch vorgesehen werden, daß die Induktionsrichtung der dritten Spule 8 entgegengesetzt zu der Induktionsrichtung der ersten und zweiten Induktionsspule 1 bzw. 12 gewählt wird. Die Spulen 1, 9, 10 ind, wie aus Fig. 2 ersichtlich, in einer Meßbrücke angeordnet. Die Kompensationsspule 8 ist mit jeder ihrer Teilspulen 9 bzw. 10 in je einem Zweig einer Halbbrücke angeordnet. In einem Zweig einer Halbbrücke sind demnach die Induktionsspulen 1 und 9, im anderen Zweig der Halbbrücke die Induktionsspulen 10 und 12 angeordnet. Die Ergänzungshalbbrücke befindet sich in dem zur Messung verwendeten Meßverstärker. Versorgt wird die Halbbrücke mit einer Trägerfrequenzspannung $U_B$, abgegriffen wird die Ausgangsspannung $U_A$.

Die Ausbildung der Kompensations-Spule 8 als Doppelspule aus jeweils in einem Brückenzweig angeordneten Teilspulen hat den Vorteil, daß das Brückengleichgewicht erhalten bleibt, ohne daß Ausgleichswiderstände oder nur geringe Ausgleichswiderstände erforderlich sind.

Durch die erfindungsgemäßen Anordnungen, Ausgestaltungen und gegenseitige Abstimmung der Spulen, nämlich insbesondere eine im Vergleich zu den Induktionsspulen 8 und 12 sehr lange Induktionsspule 1 zur Wegmessung durch Verschiebung des Spulenkerns 2 innerhalb dieser Induktionsspule 1, die als Kompensationsspule wirkende Spule 8 auf der Eintauchseite des Spulenkerns 2 sowie die als Kompensationsspule wirkende Induktionsspule 12 am anderen Ende der Induktionsspule 1 sowie Ausgestaltung und Anordnung des Spulenkerns 2 wird eine Linearisierung der Aufnehmerkennlinie bei kleiner axialer Baulänge erreicht. Die Linearisierung kann ferner noch beeinflußt werden durch die Anordnung und Ausgestaltung der Ringscheiben 11 und 13 sowie der Ringelemente 5 und 6. Die Kompensationsspulen 8 und 12 bewirken in dem betreffenden Bereich des Aufnehmers eine solche Überlagerung des Magnetfeldes der benachbarten Induktionsspule 1, daß dadurch der Abfall der Induktion an den Enden der Induktionsspule aufgehoben wird.

Bewährt hat sich ein Ausführungsbeispiel mit folgenden Daten:
Induktionsspule 1: 2 × 1 800 Windungen, Breite 460 mm
Spule 9 und Spule 10: jeweils 600 Windungen parallel gewickelt, Breite 4 mm
Spule 12: 350 Windungen, Breite 4 mm
Verschiebeweg: 400 mm, Gesamtbaulänge 483 mm.

Je nach Stellung des Kerns ändern sich in der Ringscheibe 11 und der Spule 8 der magnetische Fluß und die Flußdichtewerte und beeinflussen so die Größe des Linearitätsfehlers. Aus Änderungen des Induktivitätsverlaufs ergeben sich Änderungen des Flußverlaufs, was zu Linearitätsänderungen führt.

In Endstellungen der Verschiebebewegung befindet sich das Ende des Spulenkerns 2 in der einen Endstellung nahe dem bezüglich der Darstellung in Fig. 1 oberen Ende der Induktionsspule 1 innerhalb derselben; in der anderen Endstellung befindet es sich nahe dem unteren Ende der Induktionsspule 1 innerhalb derselben. Je nach Stellung des Spulenkerns 2 ändert sich in der Induktionsspule 1 die Induktivität, was zu unterschiedlichen Ausgangssignalen führt.

Nicht näher dargestellt ist eine Ausführungsform der Erfindung, bei der die dritte Spule 8 als Einfachspule und die zweite Spule 12 als Doppelspule ausgebildet sind; auch bei dieser Ausführungsform kann vorgesehen werden, daß die Induktionsrichtung der dritten Spule 8 gleich oder entgegengesetzt zur Induktionsrichtung der beiden anderen Spulen 1 und 12 gewählt wird.

## Patentansprüche

1. Induktiver Wegaufnehmer mit zwei koaxial und in einer Meßbrücke angeordneten Induktionsspulen (1, 12) gleicher Induktionsrichtung, mit in Abhängigkeit von dem zu messenden Weg axial beweglich gelagertem Spulenkern (2) aus magnetisierbarem Material und mit einer dritten Spule (8), die so angeordnet und bemessen ist, daß ihr Magnetfeld in einem Bereich des Aufnehmers eine solche Überlagerung des Magnetfeldes einer benachbarten Induktionsspule (1) bewirkt, daß dadurch der Abfall der Induktion an einem Ende der Induktionsspule (1) aufgehoben wird, wobei die Länge des Spulenkerns (2) und dessen Bewegungsbereich so bemessen sind, daß der Spulenkern (2) in jeder seiner Stellungen durch die dritte Spule (8) hindurchragt und sich sein Ende stets innerhalb der ersten Induktions-spule (1) befindet, und wobei die dritte Spule (8) in zumindest einen der beiden Zweige der Meßbrücke eingefügt ist, dadurch gekennzeichnet, daß die dritte Spule (8) in Eintauchrichtung des Spulenkerns (2) vor den Induktionsspulen (1, 12) angeordnet ist, daß die zweite Induktionsspule (12) so angeordnet und bemessen ist, daß ihr Magnetfeld in einem weiteren Bereich des Aufnehmers eine solche Überlagerung des Magnetfeldes einer benachbarten Induktionsspule (1) bewirkt, daß dadurch der Abfall der Induktion an dem anderen Ende der Induktionsspule (1) aufgehoben wird, daß die axiale Erstreckung der ersten Induktionsspule (1) vielfach größer als die der dritten Spule (8) und der zweiten Induktionsspule (12) ist, wobei die dritte Spule (8) und die zweite Induktionsspule (12) in etwa die gleiche axiale Erstreckung aufweisen, und daß sich das Ende des Spulenkerns (2) in jeder Stellung des Spulenkerns (2) außerhalb der zweiten Induktionsspule (12) befindet.

2. Wegaufnehmer nach Anspruch 1, dadurch gekennzeichnet, daß zumindest eine der Spulen (1, 8, 12) als Doppelspule ausgebildet ist.

3. Wegaufnehmer nach Anspruch 2, dadurch gekennzeichnet, daß eine der der ersten Induktionsspule (1) benachbarten Spulen (8, 12) als Doppelspule ausgebildet ist.

4. Wegaufnehmer nach Anspruch 3, dadurch gekennzeichnet, daß die dritte Spule (8) als Doppelspule ausgebildet ist und je eine der beiden Teilspulen (9, 10) der Doppelspule in Reihe mit jeweils einer der beiden Induktionsspulen (1, 12) in jeweils einen Zweig einer elektrischen Wechselstrom-Halbbrücke geschaltet ist.

5. Wegaufnehmer nach einem oder mehreren der Ansprüche 2 bis 4, dadurch gekennzeichnet, daß die Doppelspule eine Paralleldrahtwicklung aufweist.

6. Wegaufnehmer nach einem oder mehreren der vorhergehenden Ansprüche, dadurch gekennzeichnet, daß das Magnetfeld der dritten Spule (8) den Magnetfeldern der ersten und zweiten Induktionsspule (1 bzw. 12) gleichgerichtet ist.

7. Wegaufnehmer nach einem oder mehreren der vorhergehenden Ansprüche, dadurch gekennzeichnet, daß in Eintauchrichtung des Spulenkerns (2) vor der dritten Spule (8) und hinter der zweiten Induktionsspule (12) jeweils eine Ringscheibe (11, 13) aus einem magnetisierbaren Werkstoff angeordnet ist.

8. Wegaufnehmer nach einem oder mehreren der vorhergehenden Ansprüche, dadurch gekennzeichnet, daß zwischen erster und zweiter Spule (1, 12) und erster und dritter Spule jeweils ein Ringelement (5, 6) aus Kunststoff angeordnet ist.

9. Wegaufnehmer nach einem oder mehreren der vorhergehenden Ansprüche, dadurch gekennzeichnet, daß die Spulen (1, 8, 12) und Ringelemente (5, 6) im abgedichteten Hohlraum zwischen einem Spulenträgerrohr (4), einem Mantelrohr (7) sowie den Ringscheiben (11, 13) angeordnet sind.

## Claims

1. An inductive displacement detector having two induction coils (1,12) of the same direction of induction, which are arranged coaxially and in a measurement bridge, having a core (2) axially movable in dependence on the displacement to be measured, the core bein made of magnetisable material and having a third coil (8), which is so arranged and dimensioned that its magnetic field causes such superposition of the magnetic field of an adjacent induction coil (1) in a region of the detector that as a result the fall in induction ceases at one end of the induction coil (1), in which the length of the core (2) and its movement range are so dimensioned that the core (2) projects through the third coil (8) in each of its positions and its end is always located within the first induction coil (1), and in which the third coil (8) is inserted into at least one of the two branches of the measurement bridge, characterised in that the third coil (8) is arranged in front of the induction coils (1, 12) in the penetration direction of the core (2), that the second induction coil (12) is so arranged and dimensioned that its magnetic field causes such superposition of the magnetic field of an adjacent induction coil (1) in a further region of the detector that as a result the fall in induction at the other end of the induction coil (1) ceases, that the axial extent of the first induction coil (1) is much greater than that of the third coil (8) and of the second induction coil (12), in which the third coil (8) and the second induction coil (12) have approximately the same axial extent, and that the end of the core (2) is located outside the second induction coil (12) in each position of the core (2).

2. A displacement detector according to claim 1, characterised in that at least one of the coils (1,8,12) is formed as a double coil.

3. A displacement detector according to claim 2, characterised in that one of the coils (8, 12) adjacent the first induction coil (1) is formed as a double coil.

4. A displacement detector according to claim 3, characterised in that the third coil (8) is formed as a double coil and each of the two coil sections (9, 10) of the double coil is connected in series with one of the two induction coils (1, 12) in a respective branch of an electrical a.c. half-bridge.

5. A displacement detector according to one or more of claims 2 to 4, characterised in that the double coil has a parallel wire winding.

6. A displacement detector according to one or more of the preceding claims, characterised in that the magnetic field of the third coil (8) is directed in the same direction as the magnetic fields of the first and second induction coils (1 and/or 12).

7. A displacement detector according to one or more of the preceding claims, characterised in that in front of the third coil (8) and after the second induction coil (12) in the penetrating direction of the core (2) there is arranged in each case an annular disc (11, 13) made of a magnetisable material.

8. A displacement detector according to one or more of the preceding claims, characterised in that between the first and second coils (1,12) and the first and third coils there is arranged in each case an annular element (5,6) made of plastics.

9. A displacement detector according to one or more of the preceding claims, characterised in that the coils (1,8,12) and annular elements (5,6) are arranged in the sealed off cavity between a coil carrier tube (4), a sleeve tube (7) and the annular discs (11,13).

**Revendications**

1. Capteur de position inductif comportant deux bobines d' induction (1, 12) de même direction d' induction disposées coaxialement et dans un pont de mesure, un noyau de bobine (2) en matière magnétisable placé de façon à pouvoir se déplacer axialement en fonction du trajet à mesurer, et une troisième bobine (8) disposée et dimensionnée de façon que son champ magnétique provoque dans une zone du capteur une superposition telle du champ magnétique d'une bobine d'induction (1) voisine que cela supprime la chute de l'induction à une extrémité de la bobine d'induction (1), la longueur du noyau (2) et son intervalle de déplacement étant calculés de façon que le noyau (2) traverse, dans chacune de ses positions, la troisième bobine (8) et que son extrémité se trouve constamment à l'intérieur de la première bobine d'induction (1), et la troisième bobine (8) étant insérée dans l'une au moins des deux branches du pont de mesure, caractérisé en ce que la troisièmp bobine (8) est placée, dans la direction de pénétration du noyau (2), avant les bobines d'induction (1, 12), en ce que la seconde bobine d'induction (12) est disposée et dimensionnée de façon que son champ magnétique provoque dans une autre zone du capteur une superposition telle du champ magnétique d'une bobine d'induction (1) voisine que cela supprime la chute de l'induction à l'autre extrémité de la bobine d'induction (1), en ce que l'étendue axiale de la première bobine d'induction (1), est plusieurs fois supérieure à celle de la troisième bobine d'induction (8) et de la seconde bobine d'induction (12), la troisième bobine (8) et la seconde bobine d'induction (12) présentant sensiblement la même étendue axiale, et en ce que l'extrémité du noyau (2) se trouve, dans chaque position du noyau (2), à l'extérieur de la seconde bobine d'induction (12).

2. Capteur de position selon la revendication 1, caractérisé en ce que l'une au moins des bobines (1, 8, 12) se présente sous la forme d'une bobine double.

3. Capteur de position selon la revendication 2, caractérisé en ce que l'une des bobines (8, 12) voisines de la première bobine d'induction (1) se présente sous la forme d'une bobine double.

4. Capteur de position selon la revendication 3, caractérisé en ce la troisième bobine (8) se présente sous la forme d'une bobine double et chacune des deux bobines composantes (9, 10) de la bobine double est montée en série avec une bobine respective parmi les deux bobines d'induction (8, 12) dans une branche d'un demi-pont électrique alternatif.

5. Capteur de position selon une ou plusieurs des revendications 2 à 4, caractérisé en ce que la bobine double comporte un enroulement à fils parallèles.

6. Capteur de position selon une ou plusieurs des revendications précédentes, caractérisé en ce que le champ magnétique de la troisième bobine (8) est dirigé dans le même sens que les champs magnétiques de la première bobine d'induction et de la seconde (1, 12).

7. Capteur de position selon une ou plusieurs des revendications précédentes, caractérisé en ce qu'un disque annulaire (11, 13) en matière magnétisable est placé avant la troisième bobine (8) et après la seconde bobine d'induction (12) dans le sens de pénétration du noyau (2).

8. Capteur de position selon une ou plusieurs des revendications précédentes, caractérisé en ce qu'un élément annulaire (5, 6) en matière plastique est placé respectivement entre la première bobine et la seconde (1, 12) et entre la première bobine et la troisième.

9. Capteur de position selon une ou plusieurs des revendications précédentes, caractérisé en ce que les bobine (1, 8, 12) et les éléments annulaires (5, 6) sont placés dans la cavité fermée hermétiquement entre un tube de support de bobine (4), un tube de protection (7) ainsi que les disques annulaires (11, 13).

Fig. 1

Fig. 2